# EUROPEAN PATENT SPECIFICATION

(11) **EP 1 569 291 B1**
(45) Date of publication and mention of the grant of the patent: **21.11.2012**
(21) Application number: 03758994.2
(22) Date of filing: 28.10.2003
(51) Int. Cl.: H01M 8/02, H01M 8/10, H01M 8/00

(54) **MEMBRANE-ELECTRODE STRUCTURE AND METHOD FOR PRODUCING SAME**
MEMBRAN-ELEKTRODEN-STRUKTUR UND VERFAHREN ZU IHRER HERSTELLUNG
STRUCTURE D'ELECTRODE MEMBRANE ET PROCEDE DE PRODUCTION ASSOCIE

(30) Priority: 29.10.2002 JP 2002313741; 29.10.2002 JP 2002313740; 17.12.2002 JP 2002364579; 21.10.2003 JP 2003360614; 21.10.2003 JP 2003360242; 21.10.2003 JP 2003360241
(43) Date of publication of application: 31.08.2005
(73) Proprietor: HONDA MOTOR CO., LTD., Tokyo 107-8556 (JP)
(72) Inventor: MITSUTA,Naoki c/o K.Kaisha Honda Gijutsu Kenkyusho, Wako-shi, Saitama 351-0193 (JP); SHINKAI,Hiroshic/oK.Kaisha Honda Gijutsu Kenkyusho, Wako-shi, Saitama 351-0193 (JP); NANAUMI,Masaaki c/oK.Kaisha HondaGijutsu Kenkyusho, Wako-shi, Saitama 351-0193 (JP)
(74) Representative: Dey, Michael
(86) International application number: PCT/JP2003/013777
(87) International publication number: WO 2004/040681

(56) References cited:
- EP-A- 1 289 042
- WO-A-97/23916
- JP-A- 5 006 771
- JP-A- 7 220 742
- JP-A- 9 063 622
- JP-A- 10 154 521
- JP-A- 2001 325 972
- JP-A- 2002 117 871
- US-A- 6 165 634

## Description

### Technical Field

The present invention relates to a membrane-electrode structure that is used in polymer electrolyte fuel cells, and a method for producing the same.

### Background Art

The petroleum source has been exhausted, and at the same time, environmental problems such as global warming due to the consumption of fossil fuel have increasingly become serious. Thus, a fuel cell receives attention as a clean power source for electric motors that is not accompanied with the generation of carbon dioxide. The above fuel cell has been widely developed, and some fuel cells have become commercially practical. When the above fuel cell is mounted in vehicles and the like, a polymer electrolyte fuel cell comprising a polymer electrolyte membrane is preferably used because it easily provides a high voltage and a large electric current.

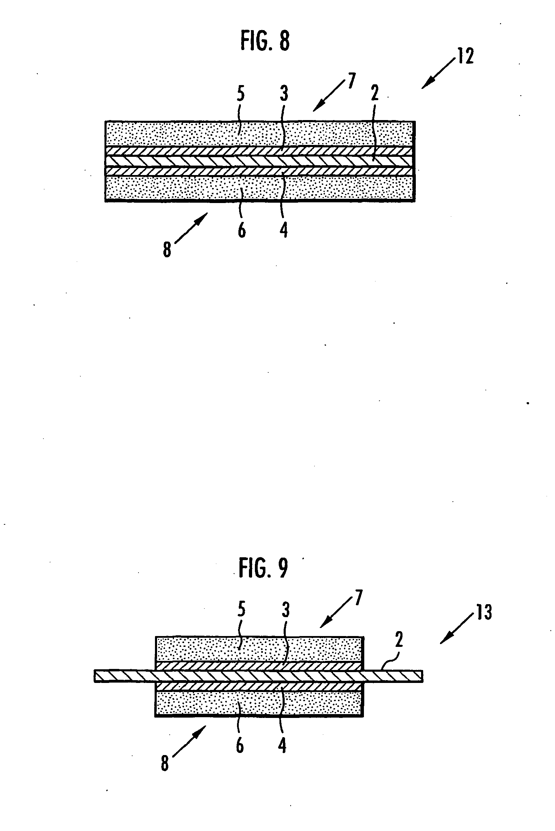

A membrane-electrode structure as shown in FIG. 8 has been known as a membrane-electrode structure used for the above polymer electrolyte fuel cell (refer to e.g., U. S. Patent No. 5,176,966).

The membrane-electrode structure 12 shown in FIG. 8 consists of a polymer electrolyte membrane 2, a pair of catalyst layers 3 and 4 that sandwich the polymer electrolyte membrane 2, and a pair of diffusion layers 5 and 6 that are laminated on both catalyst layers 3 and 4. In the membrane-electrode structure 12, the catalyst layers 3 and 4, and the diffusion layers 5 and 6 are formed in the same size as the polymer electrolyte membrane 2, and are laminated so that the outer circumferential edge of each layer 3, 4, 5, and 6 is aligned with the outer circumferential edge of the polymer electrolyte membrane 2.

In the membrane-electrode structure 12, when a reducing gas, such as hydrogen and methanol, is introduced through a diffusion layer 5 to a catalyst layer 3, protons formed in the catalyst layer 3 move to the catalyst layer 4, which is in the oxygen electrode side through the polymer electrolyte membrane 2. In the catalyst layer 4, an oxidizing gas, such as air and oxygen, is introduced through the diffusion layer 6, and the protons react with oxygen and electrons to form water. Therefore, by connecting the catalyst layers 3 and 4 with a conducting wire, the membrane-electrode structure 12 can be used as a fuel cell.

However, as FIG. 8 shows, if the catalyst layers 3 and 4 and the diffusion layers 5 and 6 are laminated so that the outer circumferential edges thereof are aligned with the outer circumferential edge of the polymer electrolyte membrane 2, there is a problem that the gas supplied to each of the diffusion layers 5 and 6 goes around the outer circumferential edge of the polymer electrolyte membrane 2 to the opposite side, and
is mixed to each other. In addition, since the locations of the outer circumferential edges of the catalyst layers 3 and 4 are close to each other, there is a problem that the catalyst layers 3 and 4 may be electrically short-circuited.

In order to solve the above-described problems, there has been proposed a membrane-electrode structure 13 wherein a polymer electrolyte membrane 2 is formed to be larger than catalyst layers 3 and 4 and diffusion layers 5 and 6, and the catalyst layers 3 and 4 and the diffusion layers 5 and 6 are laminated so as to make their outer circumferential edges locate in the inner circumference side than the outer circumferential edge of the polymer electrolyte membrane 2, as FIG. 9 shows (refer to e.g. , Japanese Patent Laid-Open No. 2000-223136).

According to the membrane-electrode structure 13 of the above, the gas supplied to each of diffusion layers 5 and 6 is blocked by the portion of the polymer electrolyte membrane 2 pendent outward from the outer circumferential edges of the catalyst layers 3 and 4 and the diffusion layers 5 and 6 to prevent the mixing thereof. The above-described dependent portion of the polymer electrolyte membrane 2 can also prevent the electrical short-circuiting of the catalyst layers 3 and 4.

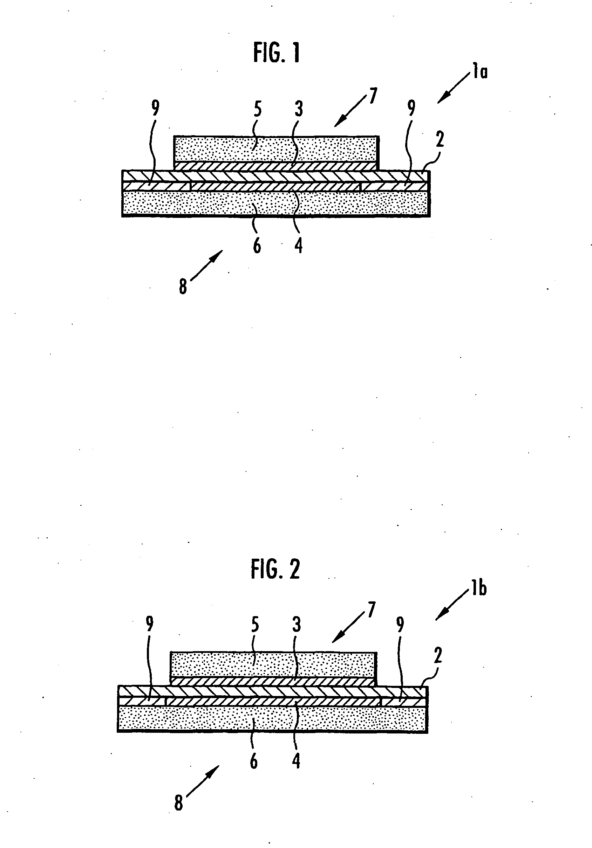

However, in a fuel cell using the membrane-electrode structure 13, if the thickness of the polymer electrolyte membrane 2 is thinned for improving the output, the mechanical strength of the polymer electrolyte membrane 2 is lowered, and the portion pendent from the outer circumferential edges of the catalyst layers 3 and 4 and the diffusion layers 5 and 6 is easily broken. Therefore, the present applicant has proposed membrane-electrode structures 1a and 1b wherein the entire outer circumference of one catalyst layer 4 is adhered to the polymer electrolyte membrane 2 to form an adhesive support layer 9 for supporting the polymer electrolyte membrane 2, and one face of the polymer electrolyte membrane 2 is coated with the catalyst layer 4 and the adhesive support layer 9, as FIGS. 1 and 2 shows (refer to Japanese Patent Laid-Open No. 2003-68323).

In the membrane-electrode structures 1a and 1b, the polymer electrolyte membrane 2 extended outwardly from the outer circumferential edges of the catalyst layers 3 and 4 and the diffusion layers 5 and 6 is protected by the adhesive support layer 9, and the prevention of damage is expected. Also in the membrane-electrode structures 1a and 1b, by forming a diffusion layer 6 that coats the catalyst layer 4 and the adhesive support layer 9, it is expected that the function to protect the above-described polymer electrolyte membrane 2 can be strengthened.

However, since a fuel cell is exposed to a high-temperature high-humidity environment during operation, the adhesive support layer 9 may peel off the polymer electrolyte membrane 2 depending on the type of adhesive that constitutes the adhesive support layer 9 of the membrane-electrode structures 1a and 1b, and the effect to protect the polymer electrolyte membrane 2 may not be sufficiently achieved.

JP 2001-325972 discloses a curing composition for fuel cells. The disclosed curing composition consists of an isobutylene system polymer which contains, in one molecule, at least one alkenyl group, an organo-hydrogen-polysiloxane, a hydrosilylized catalyst and a silane coupling agent.

### Disclosure of the Invention

The present invention is defined by the appended set of claims.

It is an object of the present invention to solve the above-described problems, and to provide a membrane-electrode structure comprising an adhesive support layer that does not peel off the solid polymer electrolyte membrane even in a high-temperature high-humidity environment during the operation of a fuel cell.

It is another object of the present invention to provide a polymer electrolyte fuel cell using the above-described membrane-electrode structure, an electrical apparatus using the above-described polymer electrolyte fuel cell, and a transport apparatus using the above-described polymer electrolyte fuel cell.

It is further object of the present invention to provide a method for producing above-described membrane-electrode structure.

To achieve the above objects, the membrane-electrode structure of the present invention is characterized in comprising a pair of electrodes each having a catalyst layer, and a solid polymer electrolyte membrane sandwiched by the catalyst layers of both electrodes, wherein the catalyst layers are positioned in the inner circumference side than the outer circumferential edge of the solid polymer electrolyte membrane; at least one face of the solid polymer electrolyte membrane is coated with the catalyst layers, and an adhesive support layer that is formed on the catalyst layers and throughout the entire circumference of the outer circumferential side of the catalyst layers, adheres to the solid polymer electrolyte membrane, and supports the solid polymer electrolyte membrane; and the adhesive support layer is formed of an adhesive having fluorine atoms in the molecular structure, wherein the adhesive contains a polysiloxane compound and a molecule that has at least two alkenyl groups.

According to the membrane-electrode structure of the present invention, since the adhesive support layer is formed of an adhesive having fluorine atoms in the molecular structure, it can strongly adhere to the solid polymer electrode membrane and does not peel off, even if it is exposed to ahigh-temperature high-humidity environment during the operation of the fuel cell. Therefore, it can protect the solid polymer electrolyte membrane extended outwardly from the outer circumferential edges of the catalyst layers and can prevent the damage thereof. The adhesive support layer may be formed on only one face of the solid polymer electrolyte membrane or may be formed on both faces thereof.

On the other hand, if the adhesive support layer strongly adheres to the solid polymer electrolyte membrane, when the solid polymer electrolyte membrane repeats expansion and shrinkage in the above-described high-temperature high-humidity environment, the adhesive support layer may not be able to follow the above-described expansion and shrinkage. In such a case, the solid polymer electrolyte membrane may be restricted from expansion and shrinkage in the vicinity of the edge portion of the adhesive support layer to produce the concentration of stress and may be damaged. Therefore, in the membrane-electrode structure of the present invention, the above-described adhesive after curing is characterized in having a tensile elongation at break of 150% or more.

According to the adhesive support layer formed of such an adhesive, since the adhesive has a tensile elongation at break of 150% or more, the adhesive support layer can follow the expansion and shrinkage of the solid polymer electrolyte membrane in the high-temperature high-humidity environment, and can relax the concentration of stress of the solid polymer electrolyte membrane in the edge portion thereof to prevent damage.

The adhesives used according to the invention are adhesives that contain a polysiloxane compound and a molecule containing at least two alkenyl groups. The adhesives are cured by the cross-linking of the alkenyl groups and the polysiloxane compound.

Examples of the alkenyl groups include univalent unsaturated aliphatic groups such as vinyl, allyl, and butenyl groups. The polysiloxane compound and the molecule containing alkenyl groups may be molecules independent from each other, or may be a polysiloxane compound having the alkenyl groups within the same molecule that cures by the cross-linking reaction in molecules.

The membrane-electrode structure of the present invention is characterized in comprising a diffusion layer that coats the catalyst layers and the adhesive support layer. The catalyst layers and the adhesive support layer are reinforced by the coating of the catalyst layers and the adhesive support layer by the diffusion layer, and the solid polymer electrolyte membrane extended outwardly from the outer circumferential edge of the catalyst layers is further strongly protected.

The diffusion layer is advantageously formed of a porous material for introducing the supplied gas to the catalyst layers. However, in the membrane-electrode structure having a diffusion layer formed of a porous material, if a plurality of membrane-electrode structures are laminated on each other to constitute a fuel cell, there is a concern that the diffusion layer is undergone plastic deformation or damaged when an excessive face pressure is applied in the laminating direction.

Therefore, the membrane-electrode structure of the present invention is characterized in that the diffusion layer is formed of a porous material, and the adhesive support layer is integrated with the diffusion layer through an adhesive permeating layer wherein the adhesive permeates in the diffusion layer. In the membrane-electrode structure of the above constitution, the adhesive support layer formed on at least one face of the solid polymer electrolyte membrane is integrated with the diffusion layer that coats the adhesive support layer through the adhesive permeating layer.

Therefore, the strength of the diffusion layer is improved, and when a fuel cell is constituted by laminating a plurality of the membrane-electrode structures on each other, the plastic deformation or damage of the diffusion layer can be prevented.

In the membrane-electrode structure of the present invention, it is preferable that the adhesive permeating layer is formed by the permeation of the adhesive into the diffusion layer in the region where the diffusion layer formed of the porous material coats the adhesive support layer, within the range where the filling rate to the void-portion of the diffusion layer becomes 30 to 100%.

If the filling rate of the adhesive to the void portions is less than 30%, the adhesive permeating layer cannot impart a sufficient strength to the diffusion layer, and thus cannot prevent the plastic deformation or damage of the diffusion layer. If the filling rate of the adhesive to the void portions is 100%, since all the void portions of the region are filled with the adhesive, the specification of the filling rate that exceeds 100% is pointless.

The adhesive permeating layer can be formed, for example, by screen-printing the adhesive on the diffusion layer, and the filling rate of the adhesive to the void portions of the diffusion layer can be controlled by changing the conditions of the screen printing. The conditions of the screen printing that can be changed include the material, the wire diameter and the openings of the mesh for the screen; and the angle, hardness, printing pressure, and scanning speed for the squeegee.

In the membrane-electrode structure having the above-described constitution, if the outer circumferential edges of the pair of catalyst layers are positioned so as to align to each other sandwiching the solid polymer electrolyte membrane, stress due to the catalyst layers is concentrated on the same positions on the front and back of the solid polymer electrolyte membrane when a fuel cell is formed. As a result, there is large possibility that the solid polymer electrolyte membrane is broken at the portion sandwiched by the outer circumferential edges of the pair of catalyst layers.

Therefore, the membrane-electrode structure of the present invention is characterized in that at least a part of the outer circumferential edge of one catalyst layer positions at the portion different from the outer circumferential edge of the other catalyst layer, with sandwiching the solid polymer electrolyte membrane. According to the above-described constitution, the stress due to outer circumferential edges of the catalyst layers can be dissipated on both the front and back of the solid polymer electrolyte membrane, and the damage of the solid polymer electrolyte membrane can be prevented.

To dissipate the stress, it is preferable that the outer circumferential edge of one catalyst layer is positioned in the inner circumferential side than the outer circumferential edge of the other catalyst layer, with sandwiching the solid polymer electrolyte membrane.

The polymer electrolyte fuel cell of the present invention is characterized in comprising the above-described membrane-electrode structure; and the electrical or transport apparatuses of the present invention are characterized in comprising the above-described polymer electrolyte fuel cell. The electrical apparatuses include personal computers or mobile telephones, and the polymer electrolyte fuel cell of the present invention can be used as the power source, backup power source, and the like for the electrical apparatuses. Examples of the transport apparatuses include motor vehicles, ships and vessels such as submarines, and the like; and the polymer electrolyte fuel cell of the present invention can be used as the power source of the transport apparatuses and the like.

The membrane-electrode structure of the present invention can be advantageously produced by a method for producing a membrane-electrode structure comprising a pair of electrodes that comprise catalyst layers, and a solid polymer electrolyte membrane sandwiched by the catalyst layers of both electrodes wherein the catalyst layers are positioned in the inner circumference side than the outer circumferential edge of the solid polymer electrolyte membrane; at least one face of the solid polymer electrolyte membrane is coated with the catalyst layers and an adhesive support layer; and the adhesive support layer is formed throughout the entire circumference of the outer circumferential side of the catalyst layers, adheres to the solid polymer electrolyte membrane, and supports the solid polymer electrolyte membrane; characterized in comprising the steps of forming a solid polymer electrolyte membrane from a polymer electrolyte solution; forming irregularity having a maximum height Rₘₐₓ of surface roughness within a range between 3 and 20 µm on the area of the solid polymer electrolyte membrane coated by the adhesive support layer; forming the adhesive support layer by applying an adhesive having fluorine atoms in the molecular structure and containing a polysiloxane compound and a molecule that has at least two alkenyl groups onto a sheet backing, and drying; and bonding the adhesive support layer formed on the sheet backing to the area where the irregularity of the solid polymer electrolyte membrane has been formed by pressing under heating.

According to the producing method of the present invention, in the solid polymer electrolyte membrane, irregularity having a maximum height Rₘₐₓ of surface roughness within a range between 3 and 20 µm is previously formed on the area of the solid polymer electrolyte membrane coated by the adhesive support layer, and the adhesive support layer is bonded to the area where the irregularity of the solid polymer electrolyte membrane has been formed by pressing under heating. As a result, a strong adhesive force can be obtained between the adhesive support layer and the solid polymer electrolyte membrane having the irregularity, and the adhesive support layer does not peel off even if it is exposed to a high-temperature high-humidity environment during the operation of the fuel cell. Therefore, the solid polymer electrolyte membrane extended outwardly from the outer circumferential edges of the catalyst layers is protected by the adhesive support layer, and the damage thereof can be prevented.

The above-described irregularity is fine irregularity generally referred to as "wrinkle," and can be formed, for example, by pressing a mold having a surface roughness identical to the irregularity to the solid polymer electrolyte membrane. The irregularity has no effect to strengthen the adhesive force between the solid polymer electrolyte membrane and the adhesive support layer if the Rₘₐₓ is less than 3 µm. If the Rₘₐₓ exceeds 20 µm, a sufficient adhesiveness cannot be obtained between the solid polymer electrolyte membrane and the adhesive support layer, and the adhesive force is lowered by contrast.

### Brief Description of the Drawings

FIG. 1 is an explanatory sectional view showing a constitution example of the membrane-electrode structure of the first embodiment;
FIG. 2 is an explanatory sectional view showing another constitution example of the membrane-electrode structure of the first embodiment;
FIG. 3 is an explanatory sectional view showing a constitution example of the membrane-electrode structure of the second embodiment;
FIG. 4 is an explanatory sectional view showing another constitution example of the membrane-electrode structure of the second embodiment;
FIG. 5 is an explanatory sectional view showing the constitution of a membrane-electrode structure used in the measurement of the adhesive strength of the adhesive support layer, and in the test for examining the stress concentration in the vicinity of the edge portion of the adhesive support layer;
FIG. 6 is an explanatory sectional view showing the constitution of a membrane-electrode structure used in the measurement of the withstand pressure of the diffusion layer consisting of a porous material;
FIG. 7 is a graph showing the load versus the quantity of plastic deformation as an index of the withstand pressure of the diffusion layer consisting of a porous material;
FIG. 8 is an explanatory sectional view showing a constitution example of a conventional membrane-electrode structure; and
FIG. 9 is an explanatory sectional view showing a constitution example of another conventional membrane-electrode structure.

### Best Mode for Carrying Out the Invention

Next, the first embodiment of the present invention will be described.

As FIG. 1 shows, the membrane-electrode structure 1a comprises a solid polymer electrolyte membrane 2, a pair of catalyst layers 3 and 4 that sandwich the solid polymer electrolyte membrane 2, and a pair of porous diffusion layers 5 and 6 laminated on both the catalyst layers 3 and 4. In the membrane-electrode structure 1a, a catalyst layer 3 and a porous diffusion layer 5 form an electrode 7; and a catalyst layer 4 and a porous diffusion layer 6 form an electrode 8.

The solid polymer electrolyte membrane 2 is formed to be larger than the catalyst layers 3 and 4, and the catalyst layers 3 and 4 are laminated to position in the inner circumference side than the outer circumferential edge of the solid polymer electrolyte membrane 2. One face of the solid polymer electrolyte membrane 2 is coated with a catalyst layer 4, and an adhesive support layer 9 that is adhered to the solid polymer electrolyte membrane 2 and supports the solid polymer electrolyte membrane 2. The adhesive support layer 9 is formed on the entire outer circumference side of the catalyst layer 4, and the catalyst layer 4 and the adhesive support layer 9 are coated with the porous diffusion layers 6. On the other face of the solid polymer electrolyte membrane 2, the portion that extends outwardly from the outer circumferential edge of the catalyst layer 3 is exposed.

In the membrane-electrode structure 1a, the catalyst layer 3 is formed to be larger than the catalyst layer 4, and the outer circumferential edge of the catalyst layer 4 is positioned in the inner circumference side than the outer circumferential edge of the catalyst layer 3, with sandwiching the solid polymer electrolyte membrane 2. However, as the membrane-electrode structure 1b shown in FIG. 2, the catalyst layer 4 may be formed to be larger than the catalyst layer 3, and the outer circumferential edge of the catalyst layer 3 may be positioned in the inner circumference side than the outer circumferential edge of the catalyst layer 4, with sandwiching the solid polymer electrolyte membrane 2.

The solid polymer electrolyte membrane 2 is formed of a polymer electrolyte such as a perfluoroalkylene sulfonic acid polymer compound (e.g., Nafion (trade name) manufactured by DuPont) and a sulfonated polyarylene compound, and has a dry membrane thickness of, for example, 50 µm.

The catalyst layers 3 and 4 are formed of catalyst particles and an ion-conductive binder. As the catalyst particles, for example, platinum particles supported by carbon black (furnace black) so that platinum: carbon particles = 1: 1 (ratio by weight), are used. As the ion-conductive binder, the above-described polymer electrolyte is used.

The porous diffusion layers 5 and 6 are formed of carbon paper and a backing layer (not shown) on the carbon paper. The backing layer is, for example, a 4:6 (ratio by weight) mixture of carbon black and polytetrafluoroethylene particles, and the catalyst layers 3 and 4 are formed on the backing layer.

The adhesive support layer 9 is formed of an adhesive that has fluorine atoms in the molecular structure thereof. It is preferable that the adhesive contains a polysiloxane compound and a molecule that has at least two alkenyl groups, and cures when the alkenyl groups cross-link with the polysiloxane compound. It is preferable that the adhesive has a tensile elongation at break of 150% or more after curing.

Examples of such adhesives include an adhesive produced by mixing and agitating 100 parts by weight of the polymer represented by the following formula (1) (viscosity: 4.4 Pa·s; average molecular weight: 16,500; quantity of vinyl groups: 0.012 mol/100 g); 4 parts by weight of organo-hydrogen polysiloxane (CR-100 (trade name) manufactured by Kaneka Corporation); 8 parts by weight of a plasticizer (PAO-5010 (trade name) manufactured by Idemitsu Petrochemical Co., Ltd.); 12 parts by weight of fumed silica (manufactured by Tosoh Silica Corporation); and 3 parts by weight of organo-silane (KBM-303 (trade name) manufactured by Shin-Etsu Chemical Co., Ltd.); and defoaming; to which bis(1,3-divinyl-1,1,3,3-tetramethyl disiloxane)-platinum catalyst is added as a reaction catalyst so that the content of platinum is 5 × 10⁻⁴ equivalent weights to the number of moles of the vinyl groups in the polymer represented by the following formula (1)

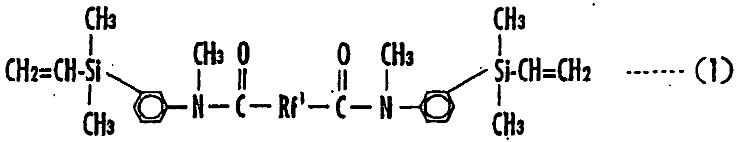

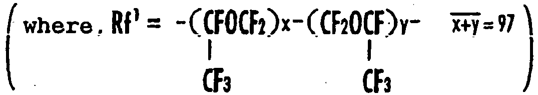

Alternatively, another example of such adhesives is an adhesive produced by mixing and agitating 100 parts by weight of methyl(3,3,3-trifluoropropyl)polysiloxane of which both ends of the molecular chain are blocked by dimethylvinylsiloxy groups (viscosity: 1.0 Pa·s; content of vinyl groups bonded to silicon atoms: 1.0% by weight); 3.5 parts by weight of dimethylhydrogensiloxy(3,3,3-trifluoropropyl)polysiloxane of which both ends of the molecular chain are blocked by dimethylhydrogensiloxy groups (viscosity: 0.01 Pa·s; content of vinyl groups bonded to silicon atoms: 0.5% by weight); and 0.01 parts by weight of ferrocene; and defoaming; to which bis(1,3-divinyl-1,1,3,3-tetramethyl disiloxane)-platinum catalyst is added as a reaction catalyst so that the ratio by weight of platinum to methyl(3,3,3-trifluoropropyl)polysiloxane of which both ends of the molecular chain are blocked by dimethylvinylsiloxy groups is 5 ppm.

In this embodiment, the membrane-electrode structures 1a and 1b are produced as follows:

First, a solid polymer electrolyte membrane 2 is formed using the casting method from an organic solvent solution of perfluoroalkylene sulfonic acid polymer compound (e.g., Nafion (trade name) manufactured by DuPont), a sulfonated polyarylene compound, and the like. The solid polymer electrolyte membrane 2 has a dry membrane thickness of, for example, 50 µm.

Next, a mold having a maximum height Rₘₐₓ of surface roughness within a range between 5 and 50 µm is pressed under heating against the region where the adhesive support layer 9 is formed throughout the entire outer circumference side of the region to form the catalyst layer 4 on the side of the solid polymer electrolyte membrane 2 where the catalyst layer 4 is formed. As a result, the surface pattern of the mold is transferred, and irregularity having a maximum height Rₘₐₓ of surface roughness within a range between 3 and 20 µm is formed on the region where the adhesive support layer 9 of the solid polymer electrolyte membrane 2 is formed.

Next, catalyst particles wherein platinum particles are supported by carbon black are evenly dispersed in an ion-conductive binder consisting of the polymer electrolyte solution to prepare a catalyst paste.

Next, a slurry wherein the mixture of carbon black and polytetrafluoroethylene (PTFE) is evenly dispersed in ethylene glycol is applied on one face of carbon paper and dried to form a backing layer, and porous diffusion layers 5 and 6 each consisting of the carbon paper and the backing layer are formed. At this time, the porous diffusion layer 5 is formed in the size within the size of the inner circumference side of the outer circumferential edge of the solid polymer electrolyte membrane 2, and the porous diffusion layer 6 is formed in the same size as the solid polymer electrolyte membrane 2.

Next, the catalyst paste is applied onto the entire surface of the backing layer of the porous diffusion layer 5, and dried to form a catalyst layer 3. On the other hand, on the porous diffusion layer 6, the adhesive is applied to the entire circumference of the portion to become the outer circumference side of the catalyst layer 4 to form an adhesive support layer 9. Then, the catalyst paste is applied to the inner circumference side of the adhesive support layer 9, and dried to form the catalyst layer 4.

At this time, in the membrane-electrode structure 1a, the catalyst layer 4 is formed in the size within the size of the inner circumference side of the outer circumferential edge of the catalyst layer 3. In the membrane-electrode structure 1b, the catalyst layer 3 is formed in the size within the size of the inner circumference side of the outer circumferential edge of the catalyst layer 4.

Next, the porous diffusion layer 5 having the catalyst layer 3 formed thereon, and the porous diffusion layer 6 having the catalyst layer 4 formed thereon and the adhesive support layer 9 formed on the entire circumference side of the catalyst layer 4 are laminated with the polymer electrolyte membrane 2 at the sides having the catalyst layers 3 and 4, respectively, and compressed underheating. As a result, the catalyst layers 3 and 4 are bonded to the solid polymer electrolyte membrane 2 and integrated to form the membrane-electrode structures 1a and 1b.

Next, the second embodiment of the present invention will be described.

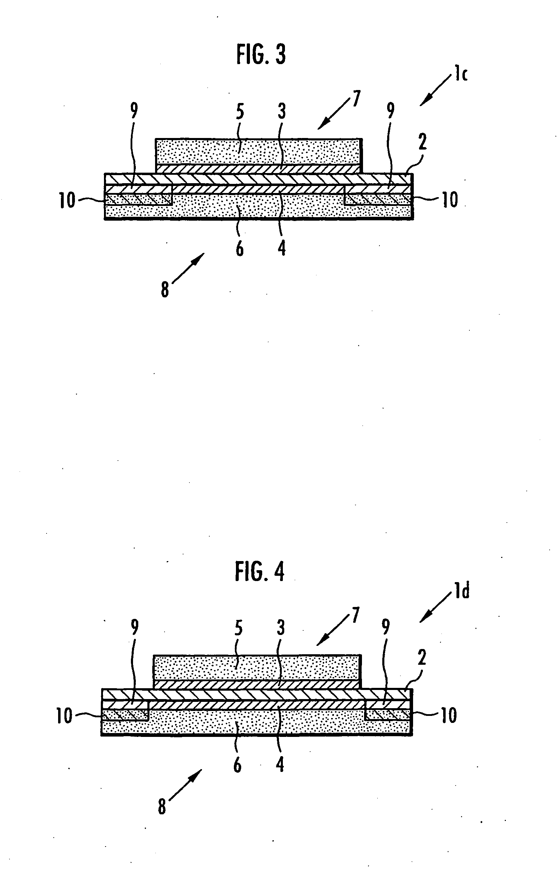

As FIG. 3 shows, the membrane-electrode structure 1c of this embodiment has the same constitution as the membrane-electrode structure 1a shown in FIG. 1, except that the adhesive that constitutes the adhesive support layer 9 is permeated into the porous diffusion layer 6 in the region where the porous diffusion layer 6 coats the adhesive support layer 9 to form an adhesive-permeated layer 10.

In the adhesive-permeated layer 10, the adhesive is permeated into the porous diffusion layer 6 in the filling rate to the void portion of the porous diffusion layer 6 within a range between 30 and 100%. As a result, the adhesive support layer 9 and the porous diffusion layer 6 are integrated through the adhesive-permeated layer 10.

In the membrane-electrode structure 1c, the catalyst layer 3 is formed to be larger than the catalyst layer 4, and the outer circumferential edge of the catalyst layer 4 is positioned on the inner circumference side than the outer circumferential edge of the catalyst layer 3, with sandwiching the solid polymer electrolyte membrane 2. However, as in the membrane-electrode structure 1d shown in FIG. 4, the catalyst layer 4 may be formed to be larger than the catalyst layer 3, and the outer circumferential edge of the catalyst layer 3 is positioned on the inner circumference side than the outer circumferential edge of the catalyst layer 4, with sandwiching the solid polymer electrolyte membrane 2.

In this embodiment, Examples of the adhesives include an adhesive produced by mixing and agitating 100 parts by weight of the polymer represented by the following formula (1) (viscosity: 4.4 Pa·s; average molecular weight: 16,500; quantity of vinyl groups: 0.012 mol/100 g); 5 parts by weight of organo-hydrogen polysiloxane (CR-100 (trade name) manufactured by Kaneka Corporation); 8 parts by weight of a plasticizer (PAO-5010 (trade name) manufactured by Idemitsu Petrochemical Co., Ltd.); 12 parts by weight of fumed silica (manufactured by Tosoh Silica Corporation); and 3 parts by weight of organo-silane (KBM-303 (trade name) manufactured by Shin-Etsu Chemical Co., Ltd.); and defoaming; to which bis(1,3-divinyl-1,1,3,3-tetramethyl disiloxane)-platinum catalyst is added as a reaction catalyst so that the content of platinum is 5 × 10⁻⁴ equivalent weights to the number of moles of the vinyl groups in the polymer represented by the following formula (1)

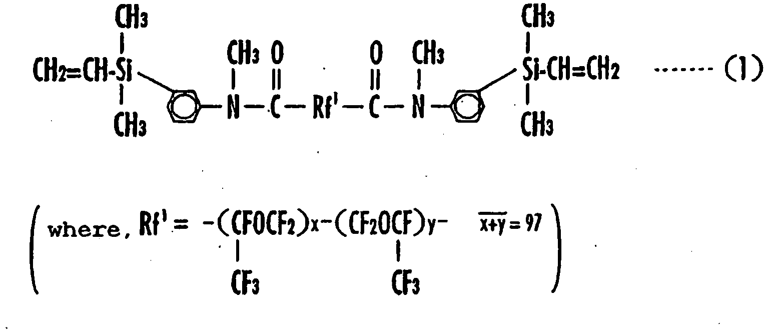

Alternatively, another example of such adhesives is an adhesive produced by mixing and agitating 100 parts by weight of methyl(3,3,3-trifluoropropyl)polysiloxane of which both ends of the molecular chain are blocked by dimethylvinylsiloxy groups (viscosity: 1.0 Pa·s; content of vinyl groups bonded to silicon atoms: 1.0% by weight); 3.5 parts by weight of dimethylhydrogensiloxy(3,3,3-trifluoropropyl)polysiloxane of which both ends of the molecular chain are blocked by dimethylhydrogensiloxy groups (viscosity: 0.01 Pa·s; content of vinyl groups bonded to silicon atoms: 0.5% by weight); and 0.01 parts by weight of ferrocene; and defoaming; to which bis(1,3-divinyl-1,1,3,3-tetramethyl disiloxane)-platinum catalyst is added as a reaction catalyst so that the ratio by weight of platinum to methyl (3,3,3-trifluoropropyl) polysiloxane of which both ends of the molecular chain are blocked by dimethylvinylsiloxy groups is 5 ppm.

In FIGS. 1 to 4, although the outer circumferential edge of the catalyst layer 4 and the inner circumferential edge of the adhesive support layer 9 are formed in close contact to each other, the adhesive support layer 9 may be formed on the entire circumference side of the catalyst layer 4, and a gap may be formed between the outer circumferential edge of the catalyst layer 4 and the inner circumferential edge of the adhesive support layer 9. Also in FIGS. 1 to 4, although the porous diffusion layer 5 of the same size as the catalyst layer 3 is laminated on the catalyst layer 3 on the face opposite to the face where the adhesive support layer 9 is formed, the porous diffusion layer 5 may be larger than the catalyst layer 3, and may have, for example, the same as the porous diffusion layers 2.

Furthermore, in FIGS. 1 to 4, although only one face of the solid polymer electrolyte membrane 2 is coated with the catalyst layer 4 and the adhesive support layer 9, the adhesive support layer 9 may be formed throughout the entire outer circumference side of the catalyst layer 3 on the other face, which may be coated with the catalyst layer 3 and the adhesive support layer 9. In this case, the adhesive support layer 9 may coat at least a part of the solid polymer electrolyte membrane 2 extended outwardly from the outer circumferential edge of the catalyst layer 3, and is not required to coat the entire face.

In the membrane-electrode structures 1a, 1b, 1c, and 1d, the electrode 7 is made to be a fuel electrode (anode), and a reducing gas such as hydrogen and methanol is introduced into the catalyst layer 3 through the porous diffusion layer 5; on the other hand, the electrode 8 is made to be an oxygen electrode (cathode), and an oxidizing gas such as air and oxygen is introduced into the catalyst layer 4 through the porous diffusion layer 6. By doing so, in the fuel electrode (electrode 7) side, protons and electrons are produced from the reducing gas by the action of the catalyst contained in the catalyst layer 3, and the protons move to the catalyst layer 4 in the oxygen electrode (electrode 8) side via the solid polymer electrolyte membrane 2. The protons react with the oxidizing gas and electrons introduced into the catalyst layer 4 to form water by the action of the catalyst contained in the catalyst layer 4. Therefore, by connecting the fuel electrode to the oxygen electrode through a conductive wire, a circuit for transporting the electrons produced in the fuel electrode to the oxygen electrode is formed to abstract electric current, and the membrane-electrode structures 1a, 1b, 1c, and 1d can be used as a fuel cell.

Next, Examples and Comparative Examples will be shown.

### [Example 1]

In this example, an adhesive was first prepared by mixing and agitating 100 parts by weight of the polymer represented by the following formula (1) (viscosity: 4.4 Pa·s; average molecular weight: 16,500; quantity of vinyl groups: 0.012 mol/100 g); 4 parts by weight of organo-hydrogen polysiloxane (CR-100 (trade name) manufactured by Kaneka Corporation); 8 parts by weight of a plasticizer (PAO-5010 (trade name) manufactured by Idemitsu Petrochemical Co., Ltd.); 12 parts by weight of fumed silica (manufactured by Tosoh Silica Corporation); and 3 parts by weight of organo-silane (KBM-303 (trade name) manufactured by Shin-Etsu Chemical Co., Ltd.); defoaming; and adding a xylene solution (8.3 × 10⁻⁵ mol/µl) of bis(1,3-divinyl-1,1,3,3-tetramethyl disiloxane)-platinum catalyst as a reaction catalyst so that the content of platinum is 5 × 10⁻⁴ equivalent weights to the number of moles of the vinyl groups in the polymer represented by the following formula (1).

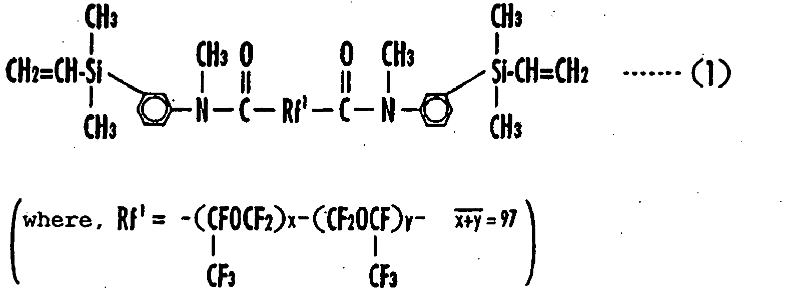

The tensile elongation at break of the above-described adhesive, measured in accordance with JIS K 6301 was 210%.

Next, a sulfonated polyarylene compound was prepared by adding concentrated sulfuric acid to a polyarylene compound represented by the following formula (2).

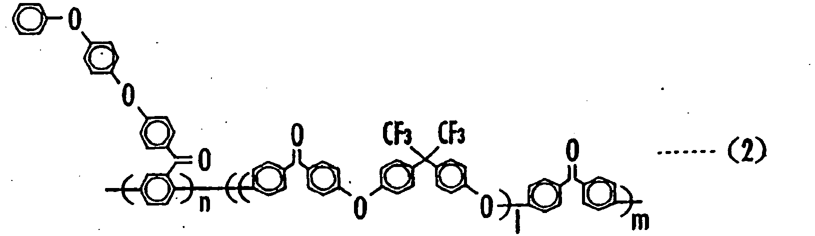

In the above formula (2), n:m = 0.5 to 100:99.5 to 0, and 1 denotes an integer of 1 or greater.

The term "sulfonated polyarylene compound" used herein means a sulfonated product of a polymer having a structure represented by the following formula: 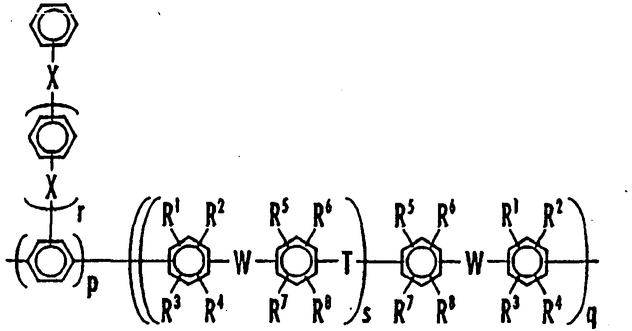 (where -X- denotes a single bond or a divalent organic group; -W- denotes a divalent electron-attracting group; -T- denotes a divalent organic group; each of R1 to R8 denotes a fluorine atom, hydrogen atom, alkyl group, aryl group or allyl group, which may be identical to or different from each other; p denotes a number from 0.5 to 100; q denotes a number from 99.5 to 0; r denotes an integer from 0 to 10; and s denotes an integer from 1 to 100.)

Examples of the above-described divalent organic groups may include electron-attracting groups such as -CO-, -CONH-, -(CF₂)ₚ- (where p is an integer from 1 to 10), -C(CF₃)₂-, -COO-, -SO- or -SO₂-, groups such as -O-, -S-, -CH=CH-, or -C≡C-, and electron-donating groups represented by the following formula:

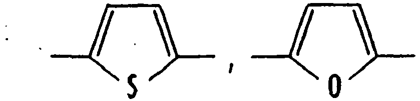

Examples of the above-described divalent electron-attracting groups may include groups such as -CO-, -CONH-. -(CF₂)ₚ- (where p is an integer from 1 to 10), -C(CF₃)₂-, -COO-, -SO- or -SO₂-.

The polyarylene compound represented by the formula (2) was prepared by the following procedures.

First, 67.3 parts by weight of 2,2-bis(4-hydrophenyl)-1,1,1,3,3,3-hexafluoropropane (bisphenol AF), 53.5 parts by weight of 4,4'-dichlorobenzophenone, and 34.6 parts by weight of potassium carbonate were added into a mixed solvent consisting of N,N-dimethylacetamide and toluene, and the mixture was heated in a nitrogen atmosphere and allowed to react at 130°C while stirring. Water formed as a result of the reaction was removed out of the system by azeotropic distillation with toluene, and the reaction was continued until water was no longer formed. Thereafter, the reaction temperature was gradually raised up to 150°C to remove toluene. The reaction was continued at 150°C for 10 hours, and then, 3.3 parts by weight of 4,4'-dichlorobenzophenone was added thereto, followed by the reaction for 5 hours.

After cooling the obtained reaction solution, the precipitate of an inorganic compound formed as a by-product was removed by filtration, and the filtrate was poured into methanol. The precipitated product was filtered, recovered, dried, and then dissolved in tetrahydrofuran. The solution was subjected to reprecipitation from methanol to obtain an oligomer represented by the following formula (3) (yield: 93%). In the formula (3), the mean value of 1 was 18.9.

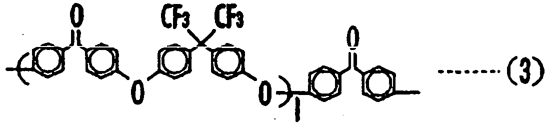

Next, 28.4 parts by weight of the oligomer represented by the above formula (3), 29.2 parts by weight of 2,5-dichloro-4'-(4-phenoxy)phenoxybenzophenone, 1.37 parts by weight of bis (triphenylphosphine) nickel dichloride, 1.36 parts by weight of sodium iodide, 7.34 parts by weight of triphenylphosphine, and 11.0 parts by weight of zinc duct ware mixed in a flask, and the mixture was held in dry nitrogen gas for nitrogen substitution. Then, N-methyl-2-pyrrolidone was added thereto, and the mixture was heated to 80°C and polymerized for 4 hours while stirring. The polymerization solution was diluted with tetrahydrofuran, solidified with hydrochloric acid/methanol, and recovered. The recovered product was repeatedly washed with methanol, and dissolved in tetrahydrofuran. The solution was subjected to reprecipitation from methanol for purification, and the precipitated polymer was dried in vacuo to obtain a polyarylene compound represented by the formula (2)(yield: 96%).

Next, the sulfonation of the polyarylene compound represented by the formula (2) was carried out by adding 96% sulfuric acid to the polyarylene compound, and stirring the mixture for 24 hours in a nitrogen flow. The obtained solution was poured into a large quantity of ion-exchanged water to precipitate the polymer, the polymer was repeatedly washed until the pH of the washing water becomes 5, and dried to obtain a sulfonated polyarylene compound of an ion-exchange capacity of 2.0 meq/g (yield: 96%).

Next, the sulfonated polyarylene compound was dissolved in N-methylpyrrolidone to prepare a polymer electrolyte solution, a membrane was formed from the polymer electrolyte solution by the casting method, and the membrane was dried to prepare a solid polymer electrolyte membrane 2 of a dry membrane thickness of 50 µm.

Next, platinum particles were supported by carbon black (furnace black) at a weight ratio of carbon black : platinum = 1 : 1 to prepare catalyst particles. Next, the catalyst particles were evenly dispersed in a solution of perfluoroalkylene sulfonic acid polymer as a ion-conductive polymer binder solution (e.g., Nafion (trade name) manufactured by DuPont) at a weight ratio of catalyst particles : binder solution = 1 : 1 to prepare a catalyst paste.

Next, a slurry prepared by evenly dispersing the mixture obtained by mixing carbon black and polytetrafluoroethylene (PTFE) particles at a weight ratio of 4 : 6 in ethylene glycol was applied onto a side of carbon paper and dried to form a backing layer, and a porous diffusion layers 5 and 6 consisting of the carbon paper and the backing layer were formed. The porous diffusion layer 5 had a size within the size of the inner circumference side of the outer circumferential edge of the solid polymer electrolyte membrane 2, and the porous diffusion layer 6 had a size same as the size of the solid polymer electrolyte membrane 2.

Next, the catalyst paste was applied onto the entire surface of the backing layer of the porous diffusion layer 5 by screen printing so that the platinum content becomes 0.5 mg/cm², heated at 60°C for 10 minutes, heated under a reduced pressure at 120°C for 15 minutes, and dried to form a catalyst layer 3.

Next, the adhesive was applied to the entire circumference of the portion to be the outer circumference side of the catalyst layer 4 of the porous diffusion layer 6 to form an adhesive support layer 9. Next, the catalyst paste was applied onto the inner circumference side of the adhesive support layer 9 formed on the porous diffusion layer 6 by screen printing so that the platinum content becomes 0.5 mg/cm², heated at 60°C for 10 minutes, heated under a reduced pressure at 120°C for 15 minutes, and dried to form a catalyst layer 4. The catalyst layer 4 had a size within the inner circumference side of the outer circumferential edge of the catalyst layer 3.

Next, the solid polymer electrolyte membrane 2 was sandwiched between the catalyst layers 3 and 4, and integrated with the catalyst layers 3 and 4 by hot-pressing at 150°C and 2.5 MPa for 15 minutes to produce a membrane-electrode structure 1a shown in FIG. 1.

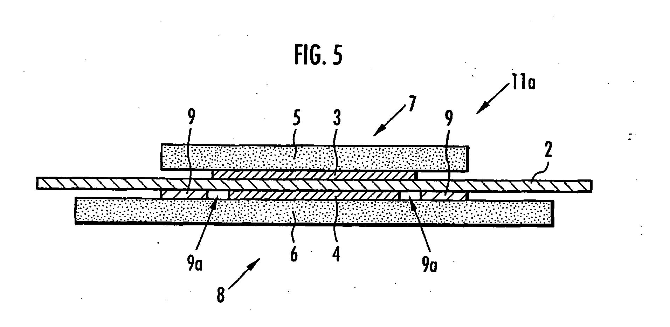

Next, in order to be used for the measurement of the adhesive strength of the adhesive support layer 9 and the test for examining the stress concentration of the solid polymer electrolyte membrane 2 in the vicinity of the edge portion of the adhesive support layer 9, a membrane-electrode structure 11a shown in FIG. 5 was produced. The membrane-electrode structure 11a has the same constitution as the membrane-electrode structure 1a other than the following aspects:
(1) The catalyst layers 3 and 4 have the same size, and are laminated so that the outer circumferential edges are aligned to each other, with sandwiching the solid polymer electrolyte membrane 2.
(2) The porous diffusion layer 5 is extended outwardly from the outer circumferential edge of the catalyst layer 3.
(3) The solid polymer electrolyte membrane 2 and the porous diffusion layer 6 are extended outwardly from the outer circumferential edge of the adhesive support layer 9.
(4) A gap 9a is formed between the outer circumferential edge of the catalyst layer 4 and the inner circumferential edge of the adhesive support layer 9.

Next, after allowing the membrane-electrode structure 11a to stand in an environment of 23°C and a relative humidity of 30% for 100 hours, only the carbon paper peeled off the porous diffusion layer 5, and cut into a strip of a width of 1 cm in the cross-sectional direction to prepare a test piece.

Next, the ends of the solid polymer electrolyte membrane 2 extended outwardly from the outer circumferential edge of the adhesive support layer 9 and the porous diffusion layer 6 were held, and were pulled in directions opposite to each other at a speed of 1 mm/sec to measure the load when the adhesive support layer 9 peeled off as the peel strength. The measurements were carried out for 5 test pieces, and the mean value was calculated as the initial strength. The results are shown in Table 1.

Next, considering a high-temperature high-humidity environment during the operation of the fuel cell, the test piece was held between punching sheets made of polytetrafluoroethylene, and the cycles of the operations to immerse the test piece in water of 95°C for 5 hours applying a load of a surface pressure of 490 kPa, and to dry it at 100°C for 5 hours, were repeated. After each of 10, 50, 100, and 200 cycles of the above operations, the peel strength of the test piece was obtained in the same manner as in the above-described initial strength. The results are shown in Table 1.

Also after each of 10, 50, 100, and 200 cycles of the above operations, the presence of cracks in the portion facing the gap 9a of the solid polymer electrolyte membrane 2 and the portion in the vicinity of the outer circumferential edge of the adhesive support layer 9 was observed through an optical microscope and a scanning electron microscope to use the results as an index of stress concentration after each cycle. The more the cracks in the above portions, the larger the stress concentration. The results are shown in Table 2.

### [Example 2]

In this example, an adhesive was prepared in the same manner as in Example 1 except that the quantity of compounded fumed silica was 20 parts by weight. The tensile elongation at break after curing of the above adhesive measured in the same manner as in Example 1 was 150%.

Next, a membrane-electrode structure 1a shown in FIG. 1 and a membrane-electrode structure 11a shown in FIG. 5 were produced in the same manner as in Example 1 except that the adhesive prepared in this example was used in place of the adhesive used in Example 1, and the stress concentration of the solid polymer electrolyte membrane 2 was examined in the same manner as in Example 1. The results are shown in Table 2.

### [Example 3]

In this example, an adhesive was produced by mixing and agitating 100 parts by weight of methyl(3,3,3-trifluoropropyl)polysiloxane of which both ends of the molecular chain are blocked by dimethylvinylsiloxy groups (viscosity: 1.0 Pa·s; content of vinyl groups bonded to silicon atoms: 1.0% by weight); 3.5 parts by weight of dimethylhydrogensiloxy(3,3,3-trifluoropropyl)polysiloxane of which both ends of the molecular chain are blocked by dimethylhydrogensiloxy groups (viscosity: 0.01 Pa·s; content of vinyl groups bonded to silicon atoms: 0.5% by weight); and 0.01 parts by weight of ferrocene; and defoaming; to which a xylene solution (8.3 × 10⁻⁵ mol/µl) of bis(1,3-divinyl-1,1,3,3-tetramethyl disiloxane)-platinum catalyst was added as a reaction catalyst so that the ratio by weight of platinum to methyl(3,3,3-trifluoropropyl)polysiloxane of which both ends of the molecular chain are blocked by dimethylvinylsiloxy groups was 5 ppm. The tensile elongation at break after curing of the above adhesive measured in the same manner as in Example 1 was 250%.

Next, a membrane-electrode structure 1a shown in FIG. 1 and a membrane-electrode structure 11a shown in FIG. 5 were produced in the same manner as in Example 1 except that the adhesive prepared in this example was used in place of the adhesive used in Example 1, and the peel strength of the adhesive support layer 9 was measured in the same manner as in Example 1. The results are shown in Table 1.

The stress concentration of the solid polymer electrolyte membrane 2 was examined in the same manner as in Example 1. The results are shown in Table 2.

### [Comparative Example 1]

In this comparative example, an adhesive was prepared in the same manner as in Example 1 except that an isobutylene resin that contains no fluorine atoms in the molecule thereof (Epion (trade name) manufactured by Kaneka Corporation) was used in place of the polymer represented by the formula (1).

Next, a membrane-electrode structure 1a shown in FIG. 1 and a membrane-electrode structure 11a shown in FIG. 5 were produced in the same manner as in Example 1 except that the adhesive prepared in this example was used in place of the adhesive used in Example 1, and the peel strength of the adhesive support layer 9 was measured in the same manner as in Example 1. The results are shown in Table 1. [Comparative Example 2]

In this comparative example, a membrane-electrode structure 1a shown in FIG. 1 and amembrane-electrode structure 11a shown in FIG. 5 were produced in the same manner as in Example 1 except that a silicone-based adhesive not containing fluorine atoms in the molecule (1209 (trade name) manufactured by Three Bond Co., Ltd.) was used in place of the adhesive used in Example 1, and the adhesive support layer 9 was measured in the same manner as in Example 1. The results are shown in Table 1.

### [Comparative Example 3]

In this comparative example, a membrane-electrode structure 1a shown in FIG. 1 and a membrane-electrode structure 11a shown in FIG. 5 were produced in the same manner as in Example 1 except that a silicone-based adhesive not containing fluorine atoms in the molecule (1211 (trade name) manufactured by Three Bond Co., Ltd.) was used in place of the adhesive used in Example 1, and the adhesive support layer 9 was measured in the same manner as in Example 1. The results are shown in Table 1.

### [ Example 4]

In this example, an adhesive was prepared in the same manner as in Example 1 except that the quantity of compounded fumed silica was 30 parts by weight. The tensile elongation at break after curing of the above adhesive measured in the same manner as in Example 1 was 120%.

Next, the a membrane-electrode structure 1a shown in FIG. 1 and a membrane-electrode structure 11a shown in FIG. 5 were produced in the same manner as in Example 1 except that the adhesive prepared in this example was used in place of the adhesive used in Example 1, and the stress concentration of the solid polymer electrolyte membrane 2 was examined in the same manner as in Example 1. The results are shown in Table 2.

### [ Example 5]

In this example, an adhesive was prepared in the same manner as in Example 1 except that the quantity of compounded fumed silica was 40 parts by weight. The tensile elongation at break after curing of the above adhesive measured in the same manner as in Example 1 was 90%.

Next, the a membrane-electrode structure 1a shown in FIG. 1 and a membrane-electrode structure 11a shown in FIG. 5 were produced in the same manner as in Example 1 except that the adhesive prepared in this example was used in place of the adhesive used in Example 1, and the stress concentration of the solid polymer electrolyte membrane 2 was examined in the same manner as in Example 1. The results are shown in Table 2.

**[Table 1] Peel strength of adhesive support layer 9 (gf/cm)**

| | Example 1 | Example 3 | Comparative Example 1 | Comparative Example 2 | Comparative Example 3 |
|---|---|---|---|---|---|
| Initial strength | 158 | 122 | 52 | 31 | 84 |
| After 10 cycles | 141 | 101 | Peeled off | Peeled off | 40 |
| After 50 cycles | 131 | 90 | Peeled off | Peeled off | Peeled off |
| After 100 cycles | 117 | 83 | Peeled off | Peeled off | Peeled off |
| After 200 cycles | 98 | 75 | Peeled off | Peeled off | Peeled off |

**[Table 2] Tensile elongation at break of adhesive support layer 9 after curing, and presence of cracks of solid polymer electrolyte membrane 2**

| | Example 1 | Example 2 | Example 3 | Example 4 | Example 5 |
|---|---|---|---|---|---|
| Tensile elongation at break (%) | 210 | 150 | 250 | 120 | 90 |
| After 10 cycles | ○ | ○ | ○ | ○ | ○ |
| After 50 cycles | ○ | ○ | ○ | ○ | × |
| After 100 cycles | ○ | ○ | ○ | × | × |
| After 200 cycles | ○ | ○ | ○ | × | × |

| | | | | | |
|---|---|---|---|---|---|
| x: cracked ○: Not cracked | | | | | |

It is obvious from Table 1 that the adhesive support layer 9 consisting of an adhesive that contains fluorine molecules in the molecules thereof (Examples 1 and 3) has a high peel strength even after the treatments assuming a high-temperature high-humidity environment during the operation of the fuel cell are repeated for 200 cycles, and a high adhesive strength can be obtained. Whereas, it is obvious that the adhesive support layer 9 consisting of an adhesive that contains no fluorine molecules in the molecules thereof (Comparative Examples 1 to 3) has a low initial peel strength, and easily peels off by the above-described, and sufficient adhesive strength cannot be obtained.

It is also obvious from Table 2 that when the adhesive support layer 9 consisting of the adhesive that has the tensile elongation at break is 150% or more after curing is used (Examples 1 to 3), no cracks were observed in the solid polymer electrolyte membrane 2 even after the treatments assuming a high-temperature high-humidity environment during the operation of the fuel cell are repeated for 200 cycles, and stress concentration is relaxed. Whereas, it is obvious that when the adhesive support layer 9 consisting of the adhesive that has the tensile elongation at break is less than 150% after curing is used (Examples 4 and 5), the solid polymer electrolyte membrane 2 is easily cracked, and stress concentration cannot be relaxed.

### [Example 6]

In this example, the membrane formed by the casting method from the polymer electrolyte solution same as in Example 1 was dried in an oven at a temperature of 80°C for 2 hours to prepare a solid polymer electrolyte membrane 2 of a dry membrane thickness of 50 µm. The obtained solid polymer electrolyte membrane 2 was immersed in distilled water for 24 hours to remove impurities, and dried.

Next, the membrane-electrode structure 1a shown in FIG. 1 and the membrane-electrode structure 11a shown in FIG. 5 were produced in the same manner as in Example 1 except that irregularity (not shown) of the maximum height Rₘₐₓ of surface roughness within a range between 3 and 20 µm on the region where the adhesive support layer 9 of the solid polymer electrolyte membrane 2 is formed using the solid polymer electrolyte membrane 2 prepared in this embodiment, in place of the solid polymer electrolyte membrane 2 used in Example 1.

The above-described irregularity was formed by pressing a mold having "wrinkle" of which the maximum height Rₘₐₓ of the surface roughness was within a range between 5 and 50 µm against the region where the adhesive support layer 9 was formed on the entire circumference of the outer circumference side of the region where the catalyst layer 4 was formed on the side where the catalyst layer 4 of the solid polymer electrolyte membrane 2, at 40°C and 10 MPa for 10 minutes. As a result, the pattern of the "wrinkle" of the mold was transferred, and the irregularity was formed on the region where the adhesive support layer 9 of the solid polymer electrolyte membrane 2 was formed.

Next, the peel strength (initial strength) of the adhesive support layer 9 in the membrane-electrode structure 11a obtained in this example was measured in the same manner as in Example 1, and the result was 208 gf/cm. Therefore, according to the producing method of the present invention, it is obvious that an adhesive support layer 9 having a higher adhesive strength than the adhesive support layer 9 of the membrane-electrode structures 1a and 11a obtained in Examples 1 and 3, respectively can be obtained.

### [Example 7]

In this example, an adhesive was first prepared in the same manner as in Example 1, except that the quantity of the organo-hydrogen polysiloxane used was 5 parts by weight. Next, a membrane-electrode structure 1c shown in FIG. 3 was produced in the same manner as in Example 1, except that the catalyst paste was heated to dry at 120°C for 30 minutes under a reduced pressure when the catalyst layer 3 was formed, and the above-described adhesive was permeated in the region where the porous diffusion layer 6 coats the adhesive support layer 9 to form an adhesive permeated layer 10 when the adhesive support layer 9 was formed.

In this example, the above-described adhesive was applied onto the entire circumference of the portion to be the outer circumference side of the catalyst layer 4 of the porous diffusion layer 6 using a screen-printing machine (MT-750T (trade name) manufactured by Microtek Inc.) to form the adhesive support layer 9. At this time, the above-described adhesive was permeated into the region where the porous diffusion layer 6 coats the adhesive support layer 9 using a stainless-steel (SUS 304) screen of a wire diameter of 30 µm and an opening of 250 mesh/inch in the above-described screen-printing machine, so that the filling rate to the void portion of the porous diffusion layer 6 was 40%, to form an adhesive permeated layer 10.

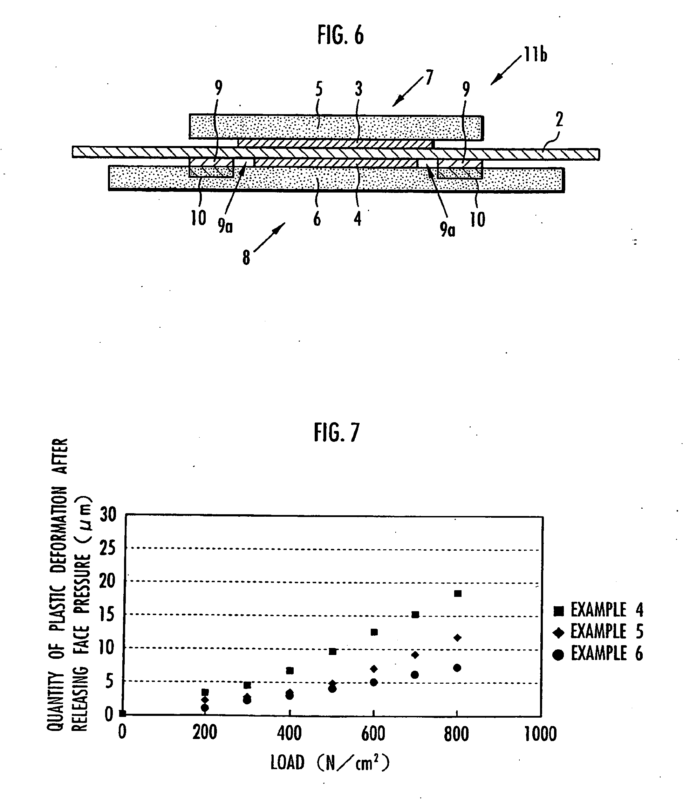

Next, in order to measure the withstand pressure strength of the porous diffusion layer 6, amembrane-electrode structure 11b shown in FIG. 6 was produced. The membrane-electrode structure 11b has the same constitution as the constitution of the membrane-electrode structure 1c other than the following aspects:
(1) The catalyst layers 3 and 4 have the same size, and are laminated so that the outer circumferential edges are aligned to each other, with sandwiching the solid polymer electrolyte membrane 2.
(2) The porous diffusion layer 5 is extended outwardly from the outer circumferential edge of the catalyst layer 3.
(3) The solid polymer electrolyte membrane 2 and the porous diffusion layer 6 are extended outwardly from the outer circumferential edge of the adhesive support layer 9.
(4) A gap 9a is formed between the catalyst layer 4 and the adhesive support layer 9.

Next, after allowing the membrane-electrode structure 11b to stand in an environment of 23°C and a relative humidity of 30% for 12 hours, and after a load of 0 to 800 N/cm² was applied to the area where the adhesive support layer 9 and the adhesive-permeated layer 10 were formed, the load was released, the quantity of plastic deformation of the porous diffusion layer 6 of the area due to the load was measured to make it as the index of the withstand pressure strength of the porous diffusion layer 6. The results are shown in FIG. 7.

### [Example 8]

In this example, the membrane-electrode structure 1c shown in FIG. 3 and the membrane-electrode structure 11b shown in FIG. 6 were produced in the same manner as in Example 7, except that the above-described adhesive was permeated into the region where the porous diffusion layer 6 coats the adhesive support layer 9 using a polyester screen of a wire diameter of 45 µm and an opening of 150 mesh/inch in the same screen-printing machine as that used in Example 7, so that the filling rate to the void portion of the porous diffusion layer 6 was 60%, to form an adhesive permeated layer 10, and the withstand pressure strength of the porous diffusion layer 6 was measured in the same manner as in Example 7. The results are shown in FIG. 7.

### [Example 9]

In this example, the membrane-electrode structure 1c shown in FIG. 3 and the membrane-electrode structure 11b shown in FIG. 6 were produced in the same manner as in Example 7, except that the above-described adhesive was permeated into the region where the porous diffusion layer 6 coats the adhesive support layer 9 using a polyester screen of a wire diameter of 55 µm and an opening of 100 mesh/inch in the same screen-printing machine as that used in Example 7, so that the filling rate to the void portion of the porous diffusion layer 6 was 70%, to form an adhesive permeated layer 10, and the withstand pressure strength of the porous diffusion layer 6 was measured in the same manner as in Example 7. The results are shown in FIG. 7.

It is obvious from FIG. 7 that the membrane-electrode structure 11b having the adhesive-permeated layer 10 (Examples 7 to 9) has a small plastic deformation due to load, excels in withstand pressure strength, and the plastic deformation or damage of the porous diffusion layer 6 can be prevented.

### Industrial Applicability

The present invention can be utilized in a solid polymer electrolyte fuel cell used in electrical and transport apparatuses, in particular as a membrane-electrode structure of an in-vehicle polymer electrolyte fuel cell.

## Claims

1. A membrane-electrode structure comprising a pair of electrodes that comprise catalyst layers, and a solid polymer electrolyte membrane sandwiched by said catalyst layers of both electrodes, wherein
said catalyst layers are positioned in the inner circumference side than the outer circumferential edge of said solid polymer electrolyte membrane;
at least one face of said solid polymer electrolyte membrane is coated with said catalyst layers, and an adhesive support layer that is formed on said catalyst layers and throughout the entire circumference of the outer circumferential side of said catalyst layers, adheres to said solid polymer electrolyte membrane, and supports said solid polymer electrolyte membrane;
and
said adhesive support layer is formed of an adhesive having fluorine atoms in the molecular structure,
**characterized in that** said adhesive contains a polysiloxane compound and a molecule that has at least two alkenyl groups.

2. The membrane-electrode structure according to claim 1, **characterized in that** said adhesive has a tensile elongation at break of 150% or more after curing.

3. The membrane-electrode structure according to claim 1, **characterized in** comprising a diffusion layer that coats said catalyst layers and said adhesive support layer.

4. The membrane-electrode structure according to claim 3, **characterized in that** said diffusion layer is formed of a porous material, and said adhesive support layer is integrated with said diffusion layer through an adhesive-permeated layer formed by permeating said adhesive into said diffusion layer.

5. The membrane-electrode structure according to claim 4, **characterized in that** said adhesive-permeated layer is formed by permeating said adhesive into said diffusion layer in the region where said diffusion layer formed of a porous material coats said adhesive support layer, within a range wherein the filling factor to the void portion of said diffusion layer is 30 to 100%.

6. The membrane-electrode structure according to claim 1, **characterized in that** at least a part of the outer circumferential edge of said one catalyst layer is positioned on the portion different from the outer circumferential edge of the other catalyst layer, with sandwiching said solid polymer electrolyte membrane.

7. The membrane-electrode structure according to claim 6, **characterized in that** the outer circumferential edge of said one catalyst layer is positioned in the inner circumference side than the outer circumferential edge of the other catalyst layer, with sandwiching said solid polymer electrolyte membrane.

8. A polymer electrolyte fuel cell **characterized in** using a membrane-electrode structure according to claim 1.

9. An electrical apparatus **characterized in** using a polymer electrolyte fuel cell comprising a membrane-electrode structure according to claim 1.

10. A transport apparatus **characterized in** using a polymer electrolyte fuel cell according to claim 8.

11. A method for producing a membrane-electrode structure according to claim 1, **characterized in** comprising the steps of:
forming a solid polymer electrolyte membrane from a polymer electrolyte solution;
forming irregularity having a maximum height Rₘₐₓ of surface roughness within a range between 3 and 20 µm on the area of said solid polymer electrolyte membrane coated by said adhesive support layer;
forming said adhesive support layer by applying an adhesive having fluorine atoms in the molecular structure onto a sheet backing, and drying; and
bonding said adhesive support layer formed on said sheet backing on the area where said irregularity of said solid polymer electrolyte membrane has been formed by pressing under heating.

## Patentansprüche

1. Membran-Elektroden-Struktur umfassend ein Elektrodenpaar, welches Katalysatorschichten umfasst, und eine feste Polymer-Elektrolyt-Membran, die sich zwischen den Katalysatorschichten beider Elektroden befindet, wobei
die Katalysatorschichten in der inneren umlaufenden Seite als die äußere umlaufende Kante der festen Polymer-Elektrolyt-Membran angeordnet sind;
mindestens eine Fläche der festen Polymer-Elektrolyt-Membran mit den Katalysatorschichten beschichtet ist, und eine Klebstoff-Trägerschicht, die auf den Katalysatorschichten und durchgehend über den gesamten Umfang der äußeren umlaufenden Seite der Katalysatorschichten gebildet ist, an der festen Polymer-Elektrolyt-Membran haftet und die feste Polymer-Elektrolyt-Membran unterstützt; und
die Klebstoff-Trägerschicht aus einem Klebstoff mit Fluoratomen in der Molekülstruktur gebildet wird,
**dadurch gekennzeichnet, dass** der Klebstoff eine Polysiloxanverbindung und eine Molekül, das mindestens zwei Alkenylgruppen aufweist, enthält.

2. Membran-Elektroden-Struktur nach Anspruch 1, **dadurch gekennzeichnet, dass** der Klebstoff eine Zug-Bruchdehnung von 150% oder mehr nach dem Aushärten aufweist.

3. Membran-Elektroden-Struktur nach Anspruch 1, **gekennzeichnet durch** Umfassen einer Diffusionsschicht, die die Katalysatorschichten und die Klebstoff-Trägerschicht beschichtet.

4. Membran-Elektroden-Struktur nach Anspruch 3, **dadurch gekennzeichnet, dass** die Diffusionsschicht aus einem porösen Material gebildet ist und dass die Klebstoff-Trägerschicht mit der Diffusionsschicht durch eine klebstoffdurchdrungene Schicht, die durch Einbringen des Klebstoffes in die Diffusionsschicht gebildet wird, integriert ist.

5. Membran-Elektroden-Struktur nach Anspruch 4, **dadurch gekennzeichnet, dass** die klebstoffdurchdrungene Schicht durch Einbringen des Klebstoffes in die Diffusionsschicht in dem Bereich, in dem die aus einem porösen Material gebildete Diffusionsschicht die Klebstoff-Trägerschicht beschichtet, gebildet wird, innerhalb eines Bereichs, in dem der Füllfaktor zum Hohlraumanteil der Diffusionsschicht 30 bis 100% beträgt.

6. Membran-Elektroden-Struktur nach Anspruch 1, **dadurch gekennzeichnet, dass** mindestens ein Teil der äußeren umlaufenden Kante der einen Katalysatorschicht auf dem Teil angeordnet ist, der sich von der äußeren umlaufenden Kante der anderen Katalysatorschicht unterscheidet, wobei sich die feste Polymer-Elektrolyt-Membran dazwischen befindet.

7. Membran-Elektroden-Struktur nach Anspruch 6, **dadurch gekennzeichnet, dass** die äußere umlaufende Kante der einen Katalysatorschicht in der inneren Umfangsseite als die äußere umlaufende Kante der anderen Katalysatorschicht angeordnet ist, wobei sich die feste Polymer-Elektrolyt-Membran dazwischen befindet.

8. Polymer-Elektrolyt-Brennstoffzelle **gekennzeichnet durch** Verwenden einer Membran-Elektroden-Struktur nach Anspruch 1.

9. Elektrisches Gerät **gekennzeichnet durch** Verwenden einer Polymer-Elektrolyt-Brennstoffzelle umfassend eine Membran-Elektroden-Struktur nach Anspruch 1.

10. Transportgerät **gekennzeichnet durch** Verwenden einer Polymer-Elektrolyt-Brennstoffzelle nach Anspruch 8.

11. Verfahren zur Herstellung einer Membran-Elektroden-Struktur nach Anspruch 1, **gekennzeichnet durch** Umfassen der Schritte:
Bilden einer festen Polymer-Elektrolyt-Membran aus einer Polymer-Elektrolyt-Lösung;
Bilden einer Abweichung, die eine maximale Höhe R_{maX} der Oberflächenrauheit innerhalb eines Bereichs zwischen 3 und 20 µm auf der Fläche der festen Polymer-Elektrolyt-Membran, die **durch** die Klebstoff-Trägerschicht beschichtet ist, aufweist;
Bilden der Klebstoff-Trägerschicht **durch** Aufbringen eines Klebstoffes, der Fluoratome in der Molekülstruktur aufweist, auf einen Träger-Bogen, und Trocknen; und
Verbinden der Klebstoff-Trägerschicht, die auf dem Träger-Bogen gebildet ist, mit dem Bereich, in dem die Abweichung der festen Polymer-Elektrolyt-Membran **durch** Pressen unter Wärme gebildet worden ist.

## Revendications

1. Structure d'électrode membrane comprenant une paire d'électrodes qui comprend des couches de catalyseur et une membrane d'électrolyte polymère solide prise en sandwich entre lesdites couches de catalyseur des deux électrodes, dans laquelle
lesdites couches de catalyseur sont positionnées dans le côté périphérique intérieur plutôt qu'au bord périphérique extérieur de ladite membrane d'électrolyte polymère solide;
au moins une face de ladite membrane d'électrolyte polymère solide est revêtue avec lesdites couches de catalyseur et une couche de support adhésive qui est formée sur lesdites couches de catalyseur et sur la circonférence entière du côté circonférentiel extérieur desdites couches de catalyseur, adhère à ladite membrane d'électrolyte polymère solide et supporte ladite membrane d'électrolyte polymère solide; et
ladite couche de support adhésive est formée d'un adhésif ayant des atomes de fluor dans sa structure moléculaire,
**caractérisée en ce que** ledit adhésif contient un a composé polysiloxane et une molécule qui a au moins deux groupes alkényles.

2. Structure d'électrode membrane suivant la revendication 1, **caractérisée en ce que** ledit adhésif a un allongement de rupture de 150% ou plus après durcissement.

3. Structure d'électrode membrane suivant la revendication 1, **caractérisée en ce qu'**elle comprend une couche de diffusion qui recouvre lesdites couches de catalyseur et ladite couche de support adhésive.

4. Structure d'électrode membrane suivant la revendication 3, **caractérisée en ce que** ladite couche de diffusion est formée d'un matériau poreux et ladite couche de support adhésive est intégrée dans ladite couche de diffusion via une imprégnée d'adhésif formée par perméation dudit adhésif dans ladite couche de diffusion.

5. Structure d'électrode membrane suivant la revendication 4, **caractérisée en ce que** ladite couche imprégnée d'adhésif est formée par la perméation dudit adhésif dans ladite couche de diffusion dans la région où ladite couche de diffusion formée d'un matériau poreux recouvre ladite couche de support adhésive, dans une plage où le facteur de remplissage de la partie de vides de ladite couche de diffusion est de 30 à 100%.

6. Structure d'électrode membrane suivant la revendication 1, **caractérisée en ce qu'**au moins une partie du bord circonférentiel extérieur de ladite une couche de catalyseur est positionnée sur la partie autre que le bord circonférentiel extérieur de l'autre couche de catalyseur, prenant en sandwich ladite membrane d'électrolyte polymère solide.

7. Structure d'électrode membrane suivant la revendication 6, **caractérisée en ce que** le bord circonférentiel extérieur de ladite une couche de catalyseur est positionné du côté circonférentiel intérieur plutôt que le bord circonférentiel extérieur de l'autre couche de catalyseur, prenant en sandwich ladite membrane d'électrolyte polymère solide.

8. Pile à combustible à électrolyte polymère **caractérisée par** l'utilisation d'une structure d'électrode membrane suivant la revendication 1.

9. Appareil électrique **caractérisé par** l'utilisation d'une pile à combustible à électrolyte polymère comprenant une structure de membrane électrode suivant la revendication 1.

10. Appareil de transport **caractérisé par** l'utilisation d'une pile à combustible à électrolyte polymère suivant la revendication 8.

11. Procédé pour fabriquer une structure de membrane électrode suivant la revendication 1, comprenant les étapes de:
former une membrane d'électrolyte polymère solide à partir d'une solution d'électrolyte polymère;
former des irrégularités ayant une hauteur maximale de rugosité de surface dans une plage entre 3 et 20 µm sur la surface de ladite membrane d'électrolyte polymère solide revêtue de ladite couche de support adhésive;
former ladite couche de support adhésive en appliquant un adhésif ayant des atomes de fluor dans la structure moléculaire sur une feuille de doublure, et sécher; et
lier ladite couche de support adhésive sur ladite feuille de doublure sur la surface où lesdites irrégularités de ladite membrane d'électrolyte polymère solide ont été formées par pressage sous chauffage.
